# EUROPÄISCHE PATENTANMELDUNG

(11) **EP 2 514 543 A1**
(43) Veröffentlichungstag der Anmeldung: **24.10.2012**
(21) Anmeldenummer: 12174170.6
(22) Anmeldetag: 01.02.2007
(51) Int. Cl.: B23B 29/034, B23C 3/05, B23C 5/20, B23C 5/24, B23B 31/30

(54) **Plattenförmiger Schneidkörper**

(30) Priorität: 03.02.2006 DE 102006005379
(62) Teilanmeldung aus: 07703189.6
(71) Anmelder: Kennametal Inc., Latrobe, PA 15650-0231 (US)
(72) Erfinder: Ebert, Günter Alfred, 91586 Lichtenau / Ansbach (DE); Lehmann, Thomas Christian, 96114 Hirschaid / Bamberg (DE)
(74) Vertreter: FDST Patentanwälte

(57) **Zusammenfassung**

Um insbesondere eine hochgenaue Bearbeitung eines Ventilsitzes (26) sowie einer Ventilsitzführung mit Hilfe insbesondere eines Kombinationswerkzeugs zu ermöglichen, sind Schneidkörper (20) vorgesehen, die insbesondere zur tangentialen Anordnung in einem Plattensitz () ausgebildet sind und einen Plattengrundkörper (68) umfassen, der zwei gegenüberliegende und über Schmalseiten (32) miteinander verbundene Grundseiten (22) umfasst, wobei ein zwei Schichten (64,66) umfassender Beschichtungsaufbau mit einer Haftvermittlerschicht (66) und einer darauf angebrachten äußeren Schicht (64) aus einem Schneidwerkstoff zur Ausbildung einer Schneidkante (72) zwischen der Schmalseite (32) und der Grundseite (22) wahlweise auf einer Schmalseite (32) oder auf einer Grundseite (22) des Plattengrundkörpers (68) insbesondere vollflächig aufgebracht ist, wobei die äußere Schicht (64) bevorzugt einen Freiwinkel (γ) ausbildet.

## Beschreibung

Die Erfindung betrifft einen plattenartigen Schneidkörper insbesondere für eine tangentiale Anordung in einem Plattensitz eines Kombinationswerkzeuges.

Das Kombinationswerkzeug dient insbesondere zur Zwischen- und Endbearbeitung eines Ventilsitzes sowie einer Ventilführung insbesondere eines Kraftfahrzeug-Zylinderkopfes. Kombinationswerkzeuge für derartige Bearbeitungsvorgänge sind beispielsweise aus der WO 03/013771 oder der DE 196 54 346 A1 zu entnehmen.

Um ein definiertes Ein- und Ausströmverhalten in den Brennraum eines Kraftfahrzeugmotors auch dauerhaft über die Motorlebensdauer zu gewährleisten, müssen die mit einem Einström- oder Ausströmventil zusammenwirkenden Flächen des Zylinderkopfes hochgenau mit nur geringsten Toleranzen bearbeitet sein. Bei der Zylinderkopffertigung werden üblicherweise in entsprechende Aussparungen eines Alu- oder Guss-Zylinderkopfes Führungshülsen sowie Ventilsitzringe eingepasst. Diese werden üblicherweise in einem zweistufigen Bearbeitungsschritt zunächst zwischenbearbeitet und anschließend feinbearbeitet. Hierzu wird jeweils ein Kombinationswerkzeug herangezogen, mit dem sowohl die zylindrische Oberfläche der die Ventilführung bildende Führungshülse als auch die in der Regel kegelförmige Oberfläche des Ventilsitzringes bearbeitet wird. Zur Bearbeitung der Ventilführung wird üblicherweise als Drehwerkzeug eine Reibahle eingesetzt. Zur Bearbeitung des Ventilsitzes werden üblicherweise mehrere über den Umfang des Kombinationswerkzeugs verteilte Schneidplatten eingesetzt, die gegenüber der Axialachse teilweise unter unterschiedlichen Kegelwinkeln angeordnet sind, so dass der Ventilsitz im Schnitt gesehen mehrere Kegelwinkel aufweist und eine Art gekrümmte Oberfläche ausgebildet ist.

Um die geforderte hochgenaue Bearbeitung zu erreichen, ist ein exakter und hochgenauer Rundlauf des Kombinationswerkzeugs erforderlich. Die Mittenachse der einzelnen Werkzeugteile, also des Drehwerkzeugs (Reibahle) sowie der Schneidkörper, muss hierbei exakt mit der Drehachse übereinstimmen. Auch ist eine sehr hohe Winkelgenauigkeit bei der Einstellung des Kegelwinkels für den Ventilsitz gefordert. Da bei der Bearbeitung eines Zylinderkopfes insbesondere in der Großserienfertigung auch mehrere Kombinationswerkzeuge parallel eingesetzt werden und gleichzeitig zugestellt werden, ist zudem eine hochgenaue exakte axiale Ausrichtung der Kombinationswerkzeuge untereinander erforderlich.

Der Erfindung liegt die Aufgabe zugrunde, einen Schneidkörper anzugeben, der insbesondere zur tangentialen Anordnung in einem Werkzeug ausgebildet ist und eine qualitativ hohe Oberflächenbearbeitung ermöglicht.

Die Aufgabe wird erfindungsgemäß gelöst durch einen plattenförmigen Schneidkörper mit den Merkmalen des Anspruchs 1, der insbesondere für eine tangentiale Anordnung in einem Plattensitz ausgebildet ist. Unter tangentialer Ausrichtung wird hierbei verstanden, dass die Auflagefläche des Schneidkörpers, mit der dieser gegen den Plattensitz gepresst wird, parallel oder zumindest annähernd parallel zu der zu bearbeitenden Oberfläche orientiert ist. Durch diese Anordnung ist die Schmalseite der Schneidplatte nach vorne in Schnitt- und Umfangsrichtung des rotierenden Werkzeugs orientiert, so dass die bei der spanenden Bearbeitung auftretenden Schnittkräfte parallel zu der Auflagefläche und damit parallel zu der Grundanlagefläche des Plattensitzes in das Werkzeug eingeleitet werden. Hierdurch ist eine sehr präzise und stabile Führung des Schneidkörpers erreicht, so dass die Oberfläche hochgenau bearbeitet werden kann. Von besonderem Vorteil bei der tangentialen Anordnung ist hierbei die sehr genaue Winkeljustage der Schneidplatte bezüglich der zu bearbeitenden Oberfläche, die im Falle eines Ventilsitzes als Kegelmantelfläche ausgebildet ist. Die Schneidplatte muss daher unter einem Kegelwinkel zu der Werkzeuglängsachse orientiert sein. Bei der tangentialen Anordnung wird dieser Winkel durch die Orientierung der Grundanlagefläche bezüglich der Axialrichtung festgelegt. Die Neigung der Grundanlagefläche gegenüber der Axialrichtung ist hierbei herstellungstechnisch sehr genau einstellbar. Von besonderem Vorteil ist, dass ― im Unterschied zu einer radial angeordneten Schneidplatte ― eine spiel- und toleranzbedingte Positionierung der Schneidplatte in einer etwas verdrehten Position gegenüber der Sollposition auf die hochgenaue Winkeljustage nur geringste Auswirkungen hat. Bei einer herkömmlichen, bei Kombinationswerkzeugen üblichen radialen Ausrichtung der Schneidplatte ist deren Plattenbreitseite (Grundseite) in Schnittrichtung nach vorne orientiert und bereits geringfügige Dreh-Abweichungen der Schneidplatte aus der Solllage führen zu erheblichen Toleranzabweichungen der zu bearbeitenden Kegelmanteloberfläche des Ventilsitzes.

Ein weiterer besonderer Vorteil der tangentialen Anordnung der Schneidplatte ist darin zu sehen, dass die Längs- oder Querausdehnung der Schneidplatte ― anders als bei einer radialen Anordnung ― nicht radial zur axialen Mittenlängsachse orientiert ist und damit nur sehr wenig Platz in radialer Richtung beansprucht. Während bei einer radialen Ausrichtung der Platzbedarf in radialer Richtung vergleichsweise groß ist, werden insbesondere bei kleinen Durchmessern der zu bearbeitenden Oberflächen aufgrund der beengten Platzverhältnisse Dreiecksschneidplatten eingesetzt. Bei der hier beschriebenen tangentialen Anordnung wird bevorzugt eine quadratische oder mehreckige Schneidplatte eingesetzt, um die Werkzeugkosten gering zu halten.

Die Schneidplatte ist speziell für den Einsatz in dem nachfolgend beschriebenen Kombinationswerkzeug ausgebildet, kann jedoch unabhängig hiervon auch bei anderen Werkzeugen eingesetzt werden, insbesondere bei solchen Werkzeugen, bei denen eine tangentiale Ausrichtung der Schneidplatten vorgesehen ist.

In einer ersten erfindungsgemäßen Ausgestaltung weist der plattenförmige Schneidkörper (Schneidplatte) einen Plattengrundkörper auf, der zwei gegenüberliegende und über Schmalseiten miteinander verbundene Grundseiten umfasst. Auf den Plattengrundkörper, der üblicherweise aus Hartmetall besteht, ist ein Beschichtungsaufbau bestehend aus zwei Schichten aufgebracht. Dieser Beschichtungsaufbau ist hierbei auf einer Schmalseite angeordnet. Der Beschichtungsaufbau besteht insbesondere aus einer Hartmetallschicht, auf der eine Schicht aus einem Schneidwerkstoff, wie beispielsweise CBN oder Diamant, aufgebracht ist. Dieser Schichtaufbau wird üblicherweise als ein Sinterkörper ausgebildet, d.h. zunächst verpresst und anschließend gesintert. Der fertige Sinterkörper wird dann auf den Plattengrundkörper insbesondere durch Löten befestigt. Die Hartmetall-Schicht des Schichtungsaufbaus dient als eine Art Haftvermittlerschicht zwischen dem Plattengrundkörper und der Schicht aus dem Schneidwerkstoff. Die Dicke der Schicht des Schneidwerkstoffs beträgt üblicherweise nur wenige Zehntelmillimeter. Durch die Anordnung des Beschichtungsaufbaus auf der Schmalseite wird bei der tangentialen Anordnung der Schneidplatte sichergestellt, dass auch bei einem tiefen Eingriff der Schneidplatte in die zu bearbeitende Oberfläche (Schnitttiefe) ausschließlich der Schneidwerkstoff mit der zu bearbeitenden Oberfläche in Kontakt kommt. Denn aufgrund der tangentialen Ausrichtung greift die Schneidplatte mit ihrer Schmalseite voraus in die Oberfläche ein.

Zweckdienlicherweise ist hierbei die Schneidplatte als eine Wendeschneidplatte mit vorzugsweise vier Schneidkanten (an einer Grundseite) ausgebildet.

Um im Eckbereich, bei dem zwei Schmalseiten aneinander stoßen, zu gewährleisten, dass der Schneidwerkstoff die Außenoberfläche an jeder Stelle bildet, stoßen die Schichten gemäß einer zweckdienlichen Weiterbildung an der Stoßkante auf Gehrung aneinander. D.h. der an den Schmalseiten aufgebrachte Schichtaufbau wird nach Art von Leisten endseitig jeweils mit einer Schräge von beispielsweise 45°, der so genannten Gehrung, versehen, so dass zwei aneinander grenzende Schichtaufbau-Leisten nicht stumpf aneinander stoßen.

In einer alternativen Ausgestaltung ist der Schichtaufbau auf die Grundseite des Plattengrundkörpers vollflächig aufgebracht, wobei in der Mitte insbesondere ein zentrales Befestigungsloch vorgesehen ist, durch das eine Befestigungsschraube zur Befestigung der Schneidplatte am Plattensitz vorgesehen ist. Der Schichtaufbau (Sinterkörper) ist daher als eine Lochplatte ausgebildet, die auf den Plattengrundkörper aufgelötet wird.

Das Kombinationswerkzeug weist ein Spannfutter mit einem Spannbereich auf und ist vorzugsweise derart ausgebildet, dass die Spannkraft im Spannbereich umlaufend und gleichmäßig in radialer Richtung wirkt und weiterhin durch einen seitlich am Dehnspannfutter angebrachten Spannmechanismus verstellbar ist. Durch diese Ausgestaltung wirken daher die Spannkräfte allseitig homogen auf den zu spannenden Schaft des Drehwerkzeugs (Reibahle) ein. Hierdurch ist ein außerzentrisches Einspannen des Drehwerkzeuges mit Versatz zu der Werkzeugmittenachse vermieden. Durch diese Ausgestaltung wird ein hochgenauer und präziser Rundlauf gewährleistet, so dass eine hochgenaue Bearbeitung der Oberflächen gewährleistet ist. Gleichzeitig ist durch den seitlich angeordneten Spannmechanismus ein Einspannen und Austauschen des Drehwerkzeugs auch dann möglich, wenn das Kombinationswerkzeug an einer Spindel einer Werkzeugmaschine montiert ist. D.h. zum Wechsel des Drehwerkzeugs ist kein Ausbau des Kombinationswerkzeugs aus der Werkzeugmaschine erforderlich.

Zweckdienlicherweise ist hierbei das Spannfutter ein hydraulisches Dehnspannfutter, welches einen ringartigen Druckraum zur Erzeugung der Spannkraft aufweist. Dieser Druckraum ist innerhalb des insbesondere zylindrischen Spannbereichs ein Zwischenraum zwischen einer äußeren und inneren Hülse. Die innere Hülse ist gegenüber der äußeren Hülse deutlich schwächer ausgebildet, so dass bei einer Druckerhöhung einer Flüssigkeit innerhalb des Druckraums der ausgeübte Hydraulikdruck zu einer Verengung der Innenhülse und damit zu einem umlaufend gleichmäßigen Verspannen des Schafts des Drehwerkzeugs führt. Das hydraulische Dehnspannfutter ist hierbei insbesondere ausgebildet wie das in der WO 2005/097383 beschriebene hydraulische Dehnspannfutter. Bevorzugt weist das Dehnspannfutter einen axialen Verstellmechanismus zur Justage des Drehwerkzeugs in Axialrichtung auf. Auch hier ist der Verstellmechanismus über ein seitlich am Spannfutter angebrachtes Verstellelement betätigbar. Durch die axiale Verstellmöglichkeit besteht insbesondere bei der parallelen Verwendung mehrerer Kombinationswerkzeuge in einer Bearbeitungsmaschine zum gleichzeitigen Bearbeiten mehrerer Ventilsitze die einfache Möglichkeit, die einzelnen Kombinationswerkzeuge in Axialrichtung exakt zueinander zu justieren. Mit einer solchen Justage wird erreicht, dass bei einer gemeinsamen Zustellung alle Kombinationswerkzeuge gleichzeitig in Eingriff mit der zu bearbeitenden Oberfläche kommen. Andernfalls würden nämlich in den gemeinsamen Zustellmechanismus ungleichmäßige und unsymmetrische Kräfte eingeleitet werden, die letztendlich zu einer Verschlechterung der Oberflächenqualität führen.

In bevorzugter Weise ist das Spannfutter mit der umlaufend gleichmäßigen, in radialer Richtung wirkenden Spannkraft, insbesondere das hydraulische Dehnspannfutter mit den seitlichen Einstellelementen, zusammen mit der tangentialen Anordnung der Schneidplatten kombiniert. Sowohl das Spannfutter mit der umlaufend gleichmäßigen Verteilung der Spannkräfte als auch die tangentiale Anordnung der Schneidplatten sorgen dafür, dass die bei der spanenden Bearbeitung auftretenden Kräfte homogen und zuverlässig auf den Grundkörper des Kombinationswerkzeugs übertragen werden, wodurch insgesamt eine hochgenaue Oberflächenbearbeitung erreicht ist.

Zweckdienlicherweise ist bei der tangentialen Ausrichtung der Schneidplatte die Grundanlagefläche unter einem Kegelwinkel im Bereich von etwa 20° ― 80° zu der Längsachse orientiert.

Um einen einfachen Austausch und eine einfache Montage der Schneidplatte zu ermöglichen, ist diese vorzugsweise in einer Kassette angeordnet, die einen sich in Axialrichtung erstreckenden Kassettengrundkörper aufweist, an dessen vorderer Stirnseite der Plattensitz angeordnet ist. Durch die zur Axialrichtung schräge Orientierung des Plattensitzes ist daher die Stirnseite zumindest in dem Bereich, in dem der Plattensitz gebildet ist, schräg zu der Axialrichtung geneigt angeordnet.

Die Kassette ist dabei vorzugsweise in einer Nut angeordnet, die in einer Seitenwandung am Grundkörper eingearbeitet ist und eine Kassettenaufnahme bildet. Der Nutgrund ist hierbei exakt parallel zu der Axialrichtung orientiert.

Gemäß einer zweckdienlichen Weiterbildung ist weiterhin vorgesehen, dass die Kassette gemeinsam mit der daran befestigten Schneidplatte in Axialrichtung mit Hilfe eines ersten Justierelements justierbar ist. Dieses Justierelement ist hierbei zwischen einer Kassettenrückwand und der Nutrückwand eingespannt. Das Justierelement stützt sich daher in Axialrichtung an der Nutrückwand ab. Diese Ausgestaltung hat den besonderen Vorteil, dass die aufgrund des axialen Vorschubs bei der spanenden Bearbeitung auftretenden, in Axialrichtung wirkenden Kräfte sicher in den Werkzeuggrundkörper eingeleitet werden. Da das Justierelement in Axialrichtung eingespannt ist, besteht kein axiales Spiel, so dass auch bei großen Axialkräften die genaue Solllage der Schneidkante der Schneidplatte beibehalten bleibt.

Vorzugsweise ist hierbei das Justierelement als ein Spannkeil ausgebildet, der mit Hilfe eines nach Art einer Schraube ausgebildeten Stellelements in Richtung der Längsachse des Stellelements verschieblich ist. Der Spannkeil weist hierbei seitliche Keilflächen auf, mit denen er auf die Kassette einerseits und auf die Nutrückwand andererseits einwirkt. Das Stellelement ist hierbei vorzugsweise in Radialrichtung oder annähernd in Radialrichtung, also senkrecht zur Axialrichtung, orientiert. Mit dieser Ausgestaltung wird daher die Verspannung des Keils durch ein Verschieben des Keils in Richtung der Längsachse des Stellelements erreicht. Eine Drehbewegung des Keils ist hierbei nicht erforderlich. Zweckdienlicherweise ist das Stellelement hierbei als ein Doppelgewindestift mit gegenläufigen Gewindesteigungen ausgebildet, wobei der vordere Gewindeteil in den Grundkörper eingreift und der hintere Gewindeteil in den Spannkeil eingreift. Bei einer Drehung des Gewindestifts wird dadurch die Relativposition zwischen dem Nutgrund und dem Spannkeil variiert, d.h. der Spannkeil wird in Richtung der Längsachse der Stellschraube verschoben. Die Spannflächenpaarungen zwischen dem Spannkeil einerseits und der Nutrückwand bzw. der Kassettenrückwand andererseits sind hierbei derart winklig angeordnet, dass durch diese Verstellbewegung durch den Spannkeil eine Keilwirkung zwischen Nutrückwand und Kassettenrückwand erzeugt wird. Hierbei sind alternativ oder in Kombination die Seitenflächen des Spannkeils beidseitig oder nur einseitig oder auch die Gegenwirkungsflächen der Nutrückwand und/oder der Kassettenrückwand nach Art eines Keils schräg verlaufend ausgebildet.

Insgesamt ist durch das erste Justierelement eine einfache und hochgenaue Justage der Schneidplatte in Axialrichtung ermöglicht. Auch diese von der axialen Justage des Drehwerkzeugs unabhängige axiale Justage ist insbesondere beim parallelen Betrieb mehrerer Kombinationswerkzeuge von besonderem Vorteil.

Weiterhin ist in einer bevorzugten Weiterbildung ein zweites Justierelement vorgesehen, mit dem die Kassette im montierten Zustand in Radialrichtung justierbar ist. Durch diese radiale Justiermöglichkeit wird insbesondere bei mehreren um den Umfang herum verteilten Schneidplatten die Möglichkeit geschaffen, diese exakt auf einer Kreisbahn zu justieren.

Das zweite Justierelement ist hierbei insbesondere als eine Justierschraube ausgebildet, die in ein Gewinde der Kassette eindrehbar ist und sich gegen den Grundkörper abstützt. Die Kassette wird daher mit Hilfe der Justierschraube gegen den Nutgrund der Kassettenaufnahme weggedrückt. Beide Justierelemente sind vorzugsweise fliehkraftgesichert ausgebildet.

Das Kombinationswerkzeug wird bevorzugt zur spanenden Bearbeitung eines Bohrlochs sowie dessen Bohrungsoberfläche in einem Arbeitsgang eingesetzt, insbesondere zur spanenden Bearbeitung einer Ventilführung und deren Ventilsitzes.

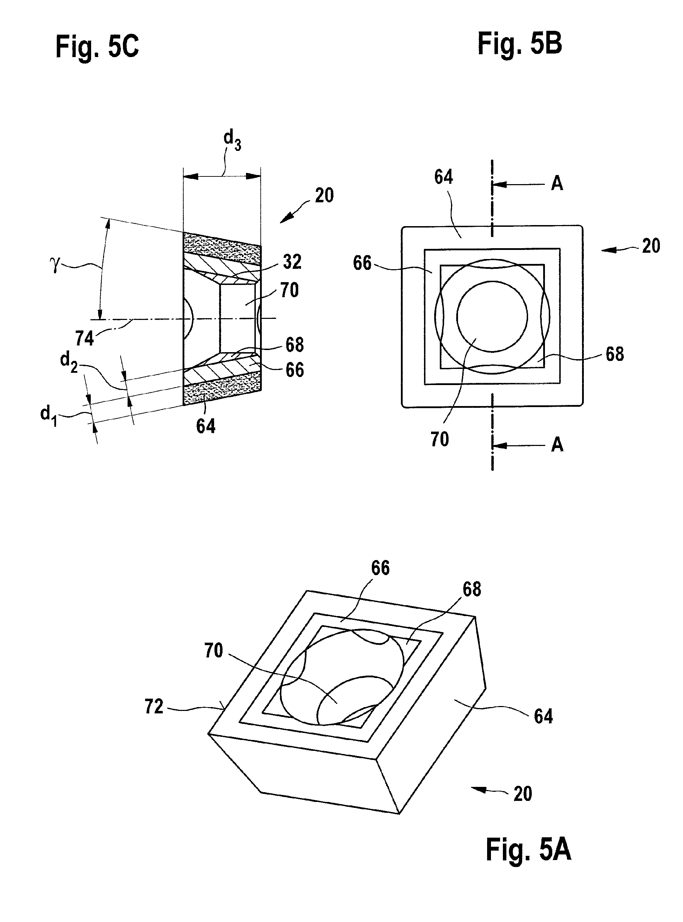

Ausführungsbeispiele des erfindungsgemäßen Schneidkörpers werden im Folgenden anhand der Figuren 5A- 5C, &A- &c sowie 7A bis 7C näher erläutert. Die übrigen Figuren dienen zur Erläuterung des bevorzugten Einsatzes derartiger Schneidkörper in einem Kombinationswerkzeug zur Ventilsitzbearbeitung. Es zeigen jeweils in schematischen und teilweise vereinfachten Darstellungen:
- Fig. 1A: eine perspektivische Ansicht eines Kombinationswerkzeugs mit einem hydraulischen Dehnspannfutter und tangential angeordneten Wendeschneidplatten,
- Fig. 1 B: eine Draufsicht auf die Stirnseite des Kombinationswerkzeugs nach Fig. 1A,
- Fig. 1C: einen Schnitt entlang der Linie A-A in Fig. 1B,
- Fig. 2A: eine Seitendarstellung einer Kassette für den Einsatz in dem Kombinationswerkzeug gemäß Fig. 1A ― 1C zusammen mit einem Spannkeil,
- Fig. 2B,2C: jeweils um 90° gedrehte Ansichten der Kassette nach Fig. 2A,
- Fig. 2D: eine Draufsicht auf die plattenseitige Stirnseite der Kassette nach Fig. 2A,
- Fig.3: eine alternative Ausgestaltung des Kombinationswerkzeugs mit einem hydraulischen Dehnspannfutter und einer radialen Anordnung der Wendeschneidplatten,
- Fig. 4A: eine Seitendarstellung einer Kassette für eine radiale Anordnung der Wendeschneidplatte,
- Fig. 4B: eine um 90° gedrehte Ansicht der Kassette nach Fig. 4A,
- Fig. 4C: eine Draufsicht auf die plattenseitige Stirnseite der Kassette gemäß Fig. 4A,
- Fig. 5A: eine perspektivische Darstellung einer Wendeschneidplatte einer ersten Alternative,
- Fig. 5B: eine Draufsicht auf die Grundseite der Wendeschneidplatte gemäß Fig. 5A und
- Fig. 5C: einen Schnitt durch die Wendeschneidplatte gemäß der Linie A-A in Fig. 5B,
- Fig. 6A: eine perspektivische Darstellung einer alternativen Ausgestaltung der Wendeschneidplatte,
- Fig. 6B: eine Draufsicht auf eine Grundseite der Wendeschneidplatte gemäß Fig. 6A,
- Fig. 6C: einen Schnitt durch die Wendeschneidplatte gemäß Linie A-A in Fig. 6B,
- Fig. 7A: eine perspektivische Darstellung einer doppelseitigen Wendeschneidplatte einer weiteren alternativen Ausgestaltung,
- Fig. 7B: eine Draufsicht auf eine Grundseite der Wendeschneidplatte nach Fig. 7A und
- Fig. 7C: einen Schnitt gemäß der Linie A-A in Fig. 7B.

In den Figuren sind gleich wirkende Teile mit den gleichen Bezugszeichen versehen.

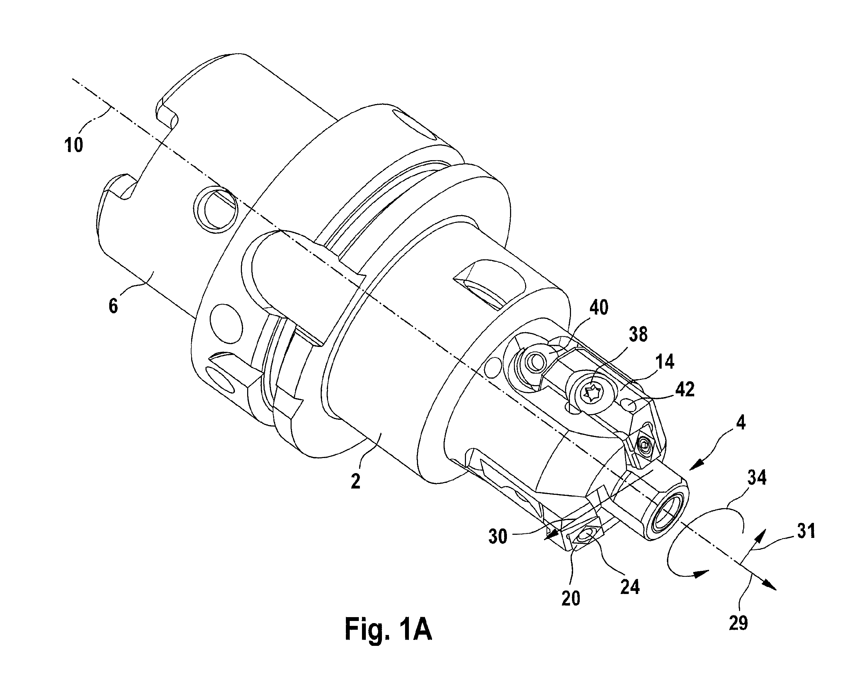

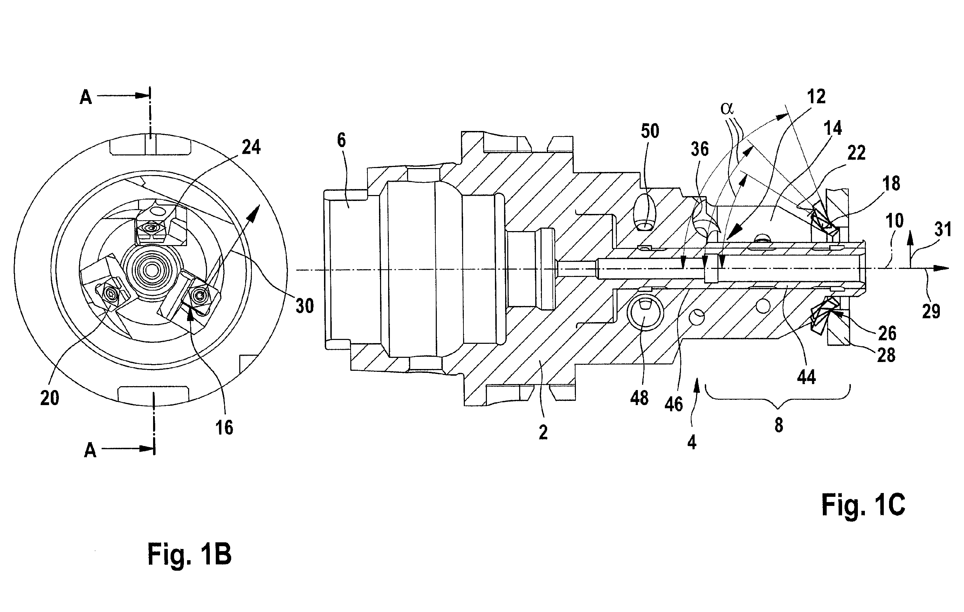

Das Kombinationswerkzeug im Ausführungsbeispiel der Fig. 1A ― 1C umfasst einen kompakt und schmal bauenden Grundkörper 2 mit einem integrierten hydraulischen Dehnspannfutter 4. Das Kombinationswerkzeug wird mit einem rückwärtigen Anschlussstück 6 mit einer Werkzeugspindel verbunden. Das Dehnspannfutter 4 weist am vorderen Ende einen zylindrischen Spannbereich 8 auf. Der Spannbereich 8 dient zur Aufnahme eines hier nicht näher dargestellten Drehwerkzeugs, insbesondere Reibahle. Seitlich neben dem Spannbereich 8 und radial von einer Mittenlängsachse 10 des Kombinationswerkzeugs beabstandet sind um den Umfang verteilt insgesamt drei Kassettenaufnahmen nach Art von Nuten in den Grundkörper 2 eingearbeitet. In den Kassettenaufnahmen 12 sind austauschbare Kassetten 14 befestigt, die an ihrer vorderen Stirnseite einen Plattensitz 16 mit einer Grundanlagefläche 18 aufweisen. Gegen diese ist jeweils eine Schneidplatte 20 mit einer ihrer im Folgenden als Anlageseite 22 bezeichneten Grundseite gespannt. Zum Verspannen ist eine zentrisch durch die Schneidplatte 20 hindurchgeführte Spannschraube 24 vorgesehen. Die um den Umfang gleichmäßig verteilten Schneidplatten 20 sind - wie in Fig. 1C angedeutet ist - unter unterschiedlichen Kegelwinkeln α gegenüber der Mittenlängsachse 10 orientiert, und zwar sind die drei Schneidplatten 20 im Ausführungsbeispiel unter 30°, 45° und 70° gegenüber der Mittenlängsachse 10 orientiert. Hierdurch wird ein Ventilsitz 26 eines zu bearbeitenden Ventilsitzringes 28 mit einer in etwa gekrümmten Oberfläche versehen, wie aus der Fig. 1C zu entnehmen ist. Jede der drei Schneidplatten erzeugt hierbei eine Teil-Kegelmantelfläche. In der Fig. 1C sind die drei Schneidplatten lediglich zur Illustration übereinander liegend dargestellt.

Das Kombinationswerkzeug erstreckt sich in einer Axialrichtung 29. Senkrecht zur Axialrichtung 29 ist eine Radialrichtung 31 definiert. Senkrecht zur Radialrichtung 31 als auch zur Axialrichtung ist schließlich eine Umfangs- oder Tangentialrichtung 30 definiert.

Im Ausführungsbeispiel der Fig. 1A - 1C sind die Schneidplatten 20 jeweils tangential angeordnet. Unter tangentialer Anordnung wird hierbei verstanden, dass die Anlageseite 22 im Wesentlichen in Tangentialrichtung 30 orientiert ist. Die Anlageseite 22 ist lediglich um einen geringen, einen Freiwinkel bildenden Winkel gegenüber der exakt tangentialen Ausrichtung geneigt angeordnet. Die Lage der Anlageseite 22 ist daher definiert zum einen durch die Orientierung unter dem Kegelwinkel α bezüglich der Mittenlängsachse 10 einerseits und der Orientierung in Tangentialrichtung 30 andererseits. Bei einer derartigen tangentialen Anordnung der Schneidplatten 20 schneidet diese mit einer ihrer Schmalseiten 32 (vgl. insbesondere Fig. 1A), die in Dreh- oder Schnittrichtung 34 nach vorne orientiert ist. Die abgehobenen Späne laufen daher bei einer tangentialen Ausrichtung entlang der Schmalseite 32 ab. Die Schnittkräfte wirken in Tangentialrichtung 30. Da in Tangentialrichtung 30 die Schneidplatte 20 ihre Längenausdehnung aufweist (üblicherweise ist die Anlageseite etwa 3 bis 5 mal so lang wie die Schmalseite), werden die Schnittkräfte problemlos von der Schneidplatte 20 aufgenommen, ohne dass es zu Vibrationen kommt. Die Schneidplatte 20 liegt weiterhin mit ihrer rückwärtigen Schmalseite sowie mit einer seitlichen Schmalseite jeweils an einer Seitenwand des Plattensitzes 16 an.

Zur Ausbildung der Kassettenaufnahme 12 erstrecken sich im Grundkörper 2 um den Umfang gleichmäßig verteilt drei Nuten in Axialrichtung 29. Wie aus Fig. 1C zu entnehmen ist, ist die Kassettenaufnahme 12 im Querschnitt gesehen in etwa L-förmig ausgebildet, ist also zur Stirnseite nach vorne hin offen und weist an ihrer Rückseite eine Nutrückwand 36 auf. Die Kassette 14 selbst weist in ihrem vorderen Bereich eine abgeschrägte Stirnseite auf, die zugleich auch den Plattensitz 16 definiert.

Die Kassette 14 ist in der Kassettenaufnahme 12 mit Hilfe einer im Wesentlichen radial orientierten Befestigungsschraube 38 befestigt. Im rückwärtigen Bereich schließt sich an die Kassette 14 ein Spannkeil 40 an, der zwischen die Kassette 14 und der Nutrückwand 36 eingespannt ist (vgl. insbesondere Fig. 1A). Der Spannkeil 40 dient zur Justage der Kassette 14 in Axialrichtung 29. Weiterhin ist im vorderen Drittel der Kassette 14, bevor die abgeschrägte Stirnseite der Kassette 14 beginnt, eine radiale Justierschraube 42 vorgesehen. Durch diese besteht die Möglichkeit, die Kassette 14 in Radialrichtung 31 gegenüber dem Grundkörper 2 zu verstellen. Die Justierschraube 42 stützt sich am Nutgrund der Kassettenaufnahme 12 ab.

Das hydraulische Dehnspannfutter 4 weist eine zentrale innen liegende Spannhülse 44 auf, die zum umschließenden Bereich des Grundkörpers 2 einen Ringspalt 46 bildet, der eine Radialbreite von maximal 0,2 mm aufweist. Der Ringspalt 46 bildet einen Druckraum und ist Teil eines Drucksystems. Der Druckraum ist mit einer Hydraulikflüssigkeit angefüllt. Mittels einer Druckstellschraube 48 wird ein hier nicht näher dargestellter Kolben betätigt, so dass der Druck im Druckraum durch Drehen der Druckstellschraube 48 variierbar ist. Die Druckstellschraube 48 ist seitlich am Dehnspannfutter 4 angebracht und von dort zugänglich. Zum Einspannen eines Drehwerkzeugs (Reibahle) wird dieses mit ihrem Schaft in die Spannhülse 44 eingesteckt, anschließend wird durch Drehen der Druckstellschraube 48 der Druck im Drucksystem und damit im Ringspalt 46 erhöht, so dass die Spannhülse 44 allseitig radial gegen den Spannschaft gespannt wird. Aufgrund der Verwendung eines Hydrauliksystems erfolgt hierbei eine homogene Druckbeaufschlagung, so dass automatisch eine exakte Ausrichtung des Drehwerkzeugs entlang der Mittenlängsachse 10 erfolgt, ohne dass ein Versatz der Mittenlängsachse des Drehwerkzeugs zur Mittenlängsachse 10 des Grundkörpers 2 auftritt.

Zusätzlich ist auch eine axiale Justagemöglichkeit für die Reibahle vorgesehen. Hierzu wirkt eine ebenfalls seitlich zugängliche Stellschraube 50 (Fig. 1 C) auf einen hier nicht näher dargestellten axial verschieblichen Stellzapfen, gegen den die Reibahle im eingespannten Zustand anschlägt. Der Stellzapfen weist hierbei im Endbereich, in dem er mit der Stellschraube 50 zusammenwirkt, vorzugsweise eine Zahnung auf, in die die Stellschraube 50 mit ihrem Gewinde eingreift.

Das zu den Fig. 1A ― 1C beschriebene Kombinationswerkzeug eignet sich insbesondere durch die Kombination der nachfolgend noch einmal zusammengefassten Merkmale für eine hochgenaue Bearbeitung einer Ventilsitzführung eines Ventilsitzes 26:
- Durch die Verwendung eines hydraulischen Dehnspannfutters 4 ist eine exakte Orientierung der Reibahle entlang der Mittenlängsachse 10 gewährleistet. Gleichzeitig bietet dieses Konstruktionsprinzip einen sehr kompakten und Platz sparenden Aufbau, so dass bei einer Motorblockbearbeitung mehrere derartiger Kombinationswerkzeuge parallel nebeneinander eingesetzt werden können.
- Durch die axiale Verstellmöglichkeit der Reibahle ist eine genaue Justage in Axialrichtung insbesondere bei der parallelen Verwendung mehrerer Kombinationswerkzeuge möglich.
   Da sowohl der Spannmechanismus (Druckstellschraube 48) als auch der axiale Verstellmechanismus (Stellschraube 50) von der Seite des Spannfutters 4 zugänglich sind, kann der Werkzeugwechsel problemlos erfolgen, ohne dass das Kombinationswerkzeug aus der Maschine ausgebaut werden müsste. Die axiale Verstellmöglichkeit ist zudem bei eingesetzter Reibahle ermöglicht.
- Durch die tangential orientierten Schneidplatten 20 werden die Schnittkräfte sicher und vibrationsfrei aufgenommen.
- Durch die tangentiale Anordnung der Schneidplatte 20 hat ein toleranzbedingtes Verdrehen der Schneidplatte 20 innerhalb des Plattensitzes 16 gegenüber der Solllage keine oder nahezu keine Auswirkung auf die Orientierung der Schneidkante der Schneidplatte 20 bezüglich des Kegelwinkels α. D.h. die tangentiale Anordnung ist vergleichsweise unempfindlich im Hinblick auf die Winkelgenauigkeit bei der Ausbildung des Kegelwinkels des Ventilsitzes 26. Dies ist von besonderem Vorteil, da für die Ventilsitze 26 eine extrem hohe Winkelgenauigkeit von beispielsweise ± 5 Minuten gefordert ist.
- Durch die Befestigung der Kassette 14 in der nutartig ausgebildeten Kassettenaufnahme 12 ist zusätzlich eine sichere Führung gewährleistet und die beim Schneiden auftretenden Kräfte werden zuverlässig in den Grundkörper 2 übertragen, ohne dass Vibrationen auftreten.
- Über den Spannkeil 40 ist eine Justage der Schneidplatte 20 in Axialrichtung 29 ermöglicht, die insbesondere bei der parallelen Verwendung mehrerer Kombinationswerkzeuge von Vorteil ist.
- Durch das Einspannen des Spannkeils 40 zwischen der Kassette 14 und der Kassettenaufnahme 12 ist die Axialposition sicher fixiert und eine Dejustage in Axialrichtung ist vermieden.
- Schließlich kann durch die radiale Verstellmöglichkeit der Kassette 14 bei Bedarf der insbesondere auch der Kegelwinkel α justiert werden. Aufgrund der Anordnung der radialen Justierschraube 42 im vorderen Drittel im Anschluss an die Spannschraube 24 erfolgt nämlich bei Betätigen der Justierschraube 42 eine Kippbewegung der Kassette 14, so dass sich der Kegelwinkel α der Schneidplatte 20 verändert.

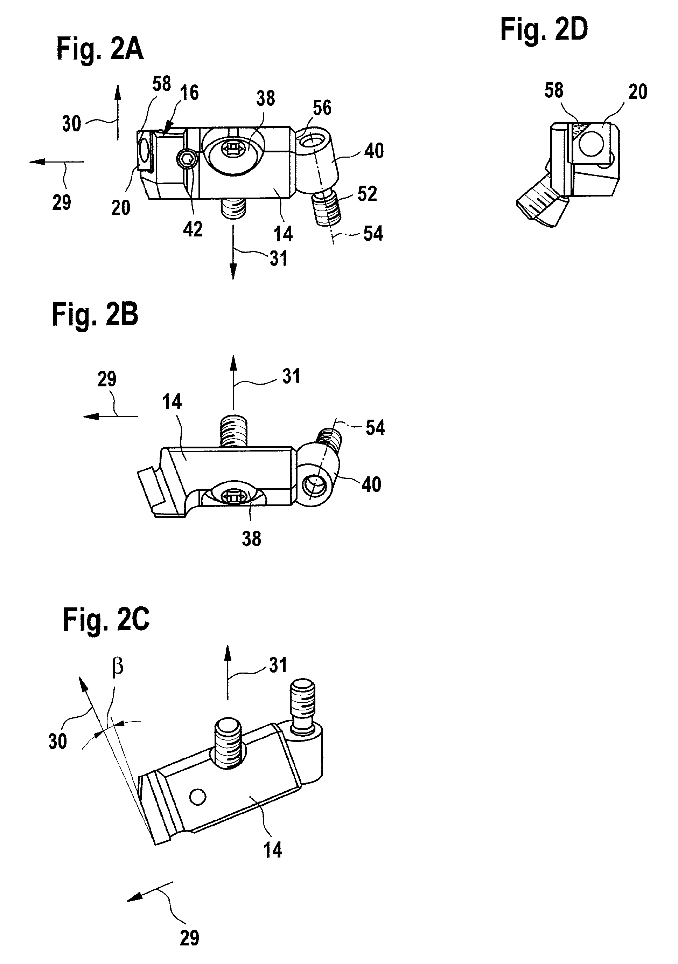

Der Aufbau der Kassette 14 und das Zusammenwirken mit dem Spannkeil 40 ist insbesondere auch aus den Fig. 2A ― 2D zu entnehmen. Der Spannkeil 40 ist mit einem Doppelgewindestift 52 versehen, der zwei gegenläufige Gewindeteilstücke aufweist. Mit seinem vorderen Gewindeteilstück greift er im montierten Zustand in ein Gewinde im Grundkörper 2 ein und mit seinem rückwärtigen Gewindeteilstück ist er im Spannkeil 40 eingedreht. Der Doppelgewindestift 52 ist entlang einer Längsachse 54 orientiert, die geneigt zu einer Kassettenrückwand 56 orientiert ist. Gegen die Kassettenrückwand 56 liegt der Spannkeil 40 mit einer Keilfläche an. Gegenüberliegend zu der flächigen Keilfläche ist der Spannkeil 40 gerundet nach Art eines Kegelmantels ausgebildet. Mit der Kegelmantelfläche liegt er passgenau in einer entsprechenden Aufnahme im Grundkörper 2 an der Nutrückwand 36 an. Beim Verstellen des Doppelgewindestifts 52 wird nunmehr der Spannkeil 40 entlang der Längsachse 54 verschoben, so dass die Position der Kassette in Axialrichtung 29 variiert wird.

Im Ausführungsbeispiel der Fig. 2A ― 2D ist bei der Schneidplatte 20 ein Schneideck 58 dargestellt, mit dem die Schneidplatte 20 beim Bearbeitungsvorgang mit dem Werkstück in Eingriff steht. Bei der Ausführungsvariante gemäß den Fig. 1A ― 1C sind insgesamt vier Schneidecken 58 zu erkennen. Die Schneidecken weisen hierbei üblicherweise eine Beschichtung aus einem harten Schneidstoff, insbesondere eine CBN-Beschichtung auf.

Wie aus Fig. 2C zu entnehmen ist, ist die Schneidplatte 20 nicht exakt parallel zur Tangentialrichtung 30 orientiert, sondern weist zu dieser einen Freiwinkel β auf, der beispielsweise im Bereich zwischen 3 und 10° liegt. Im Ausführungsbeispiels beträgt der Freiwinkel β 5°.

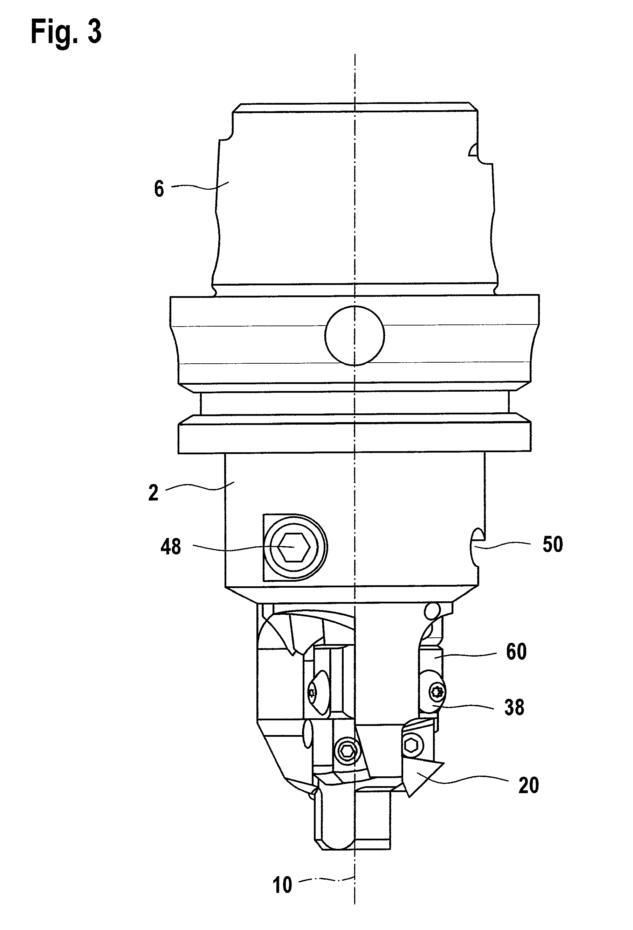

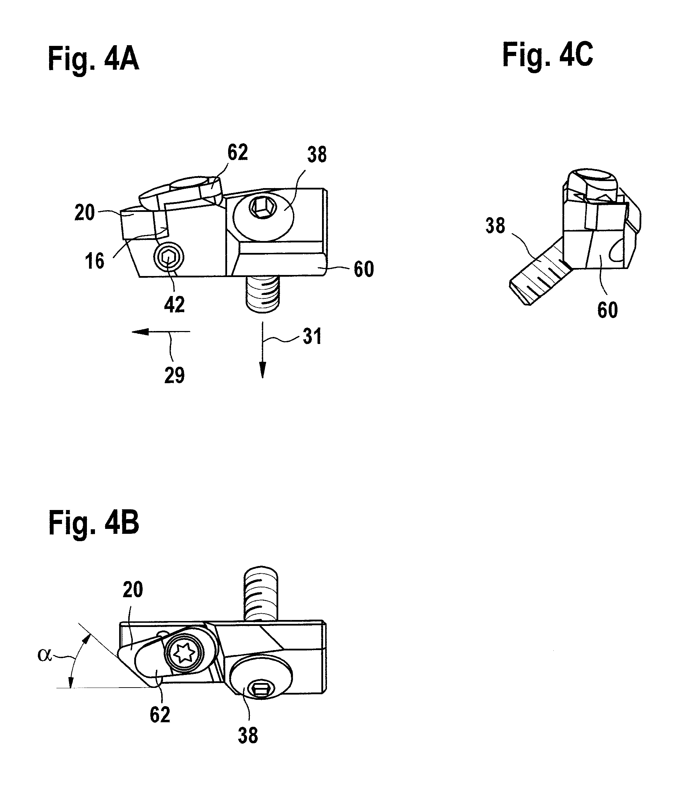

Beim Ausführungsbeispiel gemäß Fig. 3 wird für das Kombinationswerkzeug ebenfalls das zu den Fig. 1A ― 1C beschriebene Dehnspannfutter 4 eingesetzt. Im Unterschied zu dem Ausführungsbeispiel nach den Fig. 1A ― 1C kommen hier jedoch übliche Kassetten 60 mit radial angeordneten Schneidplatten 20 zum Einsatz. Als Schneidplatten werden hier insbesondere Dreiecks-Wendeschneidplatten eingesetzt. Aus Platzgründen ist insbesondere bei kleineren Ventilsitzen 26 die Verwendung von vier- oder mehreckigen Wendeschneidplatten 20 nicht möglich. Bis auf die radiale Ausrichtung der Schneidplatten 20 entspricht der Aufbau des Kombinationswerkzeuges dem des zu den Fig. 1A ― 1C beschriebenen Kombinationswerkzeugs. Der spezielle Aufbau der Kassette 60 ergibt sich aus den Fig. 4A ― 4C. Die Dreiecksschneidplatte 20 ist mit Hilfe einer Spannpratze 62 eingespannt. Wie aus Fig. 4B zu entnehmen ist, ist der Kegelwinkel α durch die Orientierung einer der drei Eckseiten, die die Schneidkante bildet, festgelegt.

In den Fig. 5 ― 7 sind nunmehr unterschiedlich ausgestaltete Wendeschneidplatten 20 dargestellt, die insbesondere für den Einsatz bei dem zuvor beschriebenen Kombinationswerkzeug, insbesondere mit dem tangential angeordneten Plattensitz 16 vorgesehen sind. Sämtliche Schneidplatten 20 sind mit einem Beschichtungsaufbau, bestehend aus zwei Schichten, versehen. Die äußere Schicht 64 besteht aus einem Schneidwerkstoff, insbesondere CBN oder auch Diamant. Die darunter liegende innere Schicht 66 besteht bevorzugt aus Hartmetall. Der aus diesen beiden Schichten 64,66 bestehende Schichtaufbau wird auf einen Plattengrundkörper 68 aufgebracht, insbesondere aufgelötet. Der Schichtaufbau wird zuvor als ein Sinterkörper hergestellt. Weiterhin weisen sämtliche Schneidplatten 20 ein zentrales Befestigungsloch 68 auf, durch das die Spannschraube 24 geführt wird.

Die Schichtdicke d1 der äußeren Schicht liegt im Bereich von einigen Zehntelmillimetern, beispielsweise im Bereich von 0,3 ist etwa 0,8 mm. Die Schichtdicke d2 der inneren Schicht 66 ist ähnlich groß. Im Ausführungsbeispiel liegt die Schichtdicke d1 der äußeren CBN-Schicht bei 0,7, die Schichtdicke d2 der inneren Hartmetallschicht 66 bei 0,6 mm. Insgesamt weisen bei den Ausführungsbeispielen gegenüberliegende Schneidkanten 72 einen Abstand a im Bereich von etwa 12 mm auf. Die Plattendicke d3 beträgt etwa 6,4 mm.

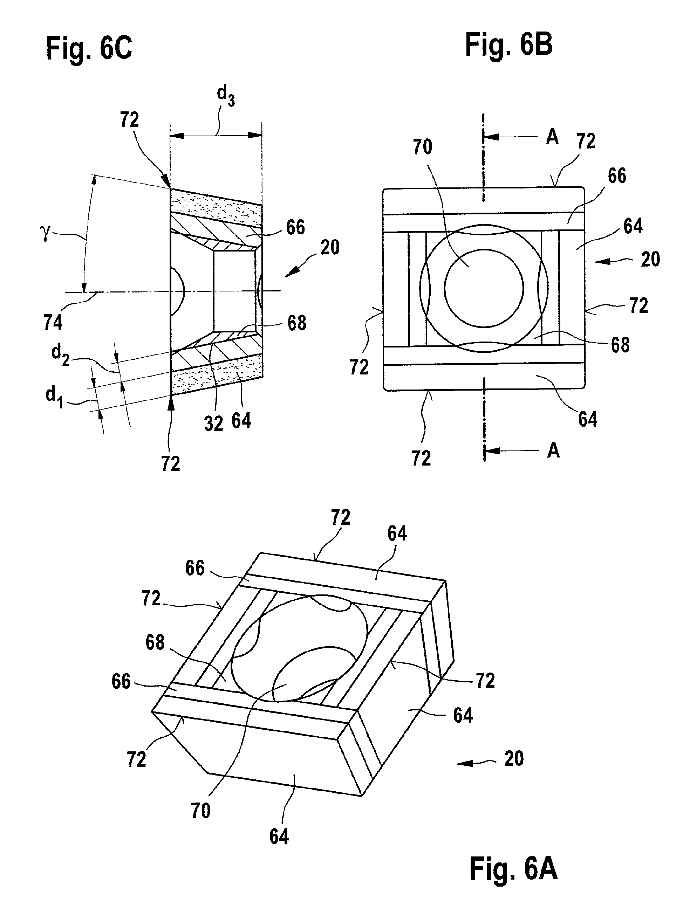

In den Ausführungsbeispielen der Fig. 5 und 6 wird der Beschichtungsaufbau als schmale Leisten vorgefertigt, die auf die Schmalseiten 32 des Plattengrundkörpers 68 aufgebracht werden. Bei der Ausführungsvariante gemäß den Fig. 5A ― 5C werden hierbei die einzelnen Leisten des Beschichtungsaufbaus auf Gehrung geschnitten, so dass die äußere Schicht 64 umlaufend den äußeren Rand der Schmalseiten 32 bildet. Im Unterschied hierzu stoßen die einzelnen Leisten beim Ausführungsbeispiel der Fig. 6A ― 6C stumpf aufeinander, so dass in Teilbereichen auch die innere Schicht 66 an der Außenseite auftritt.

Die in den Fig. 5 und 6 dargestellten Schneidplatten 20 weisen jeweils vier Schneidkanten 72 auf. Die Schmalseiten sind um einen Winkel γ gegenüber einer Plattensenkrechten 74 geneigt. Dieser Winkel liegt beispielsweise im Bereich von etwa 10 ― 15°. Alternativ zu der Ausführungsvariante gemäß Fig. 6A ― 6C wird eine Wendeschneidplatte 20 mit lediglich zwei gegenüberliegenden Schneidkanten 72 in einer einfachen Variante ausgebildet.

Bei der Anordnung des Schichtaufbaus an den Schmalseiten wird bei einer tangentialen Ausrichtung der Schneidplatte 20 der Span über die Schmalseite abgetragen, d.h. er gleitet an der Schmalseite über der äußeren Schicht 64 entlang. Die Schnitttiefe bestimmt sich bei der tangentialen Ausrichtung durch die Eintauchtiefe der Schneidplatte 20 im zu bearbeitenden Werkstück und zwar im Wesentlichen in Richtung der Plattensenkrechten 74. Unabhängig von der Schnitttiefe steht daher aufgrund der Anordnung des Schichtaufbaus an den Schmalseiten 32 immer die äußere Schicht 64 mit dem zu bearbeitenden Werkstück in Eingriff.

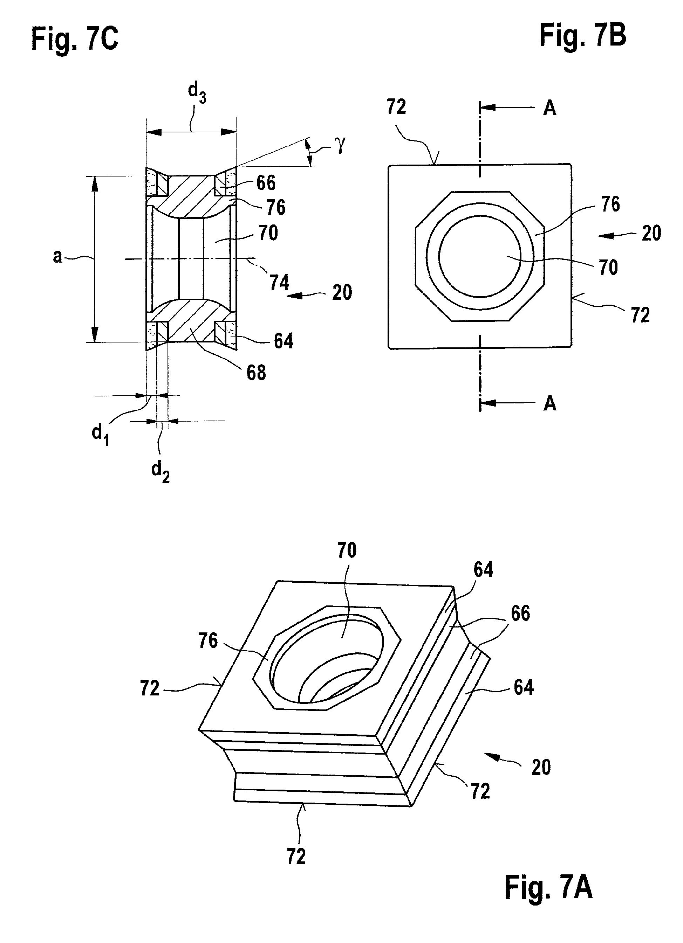

Im Ausführungsbeispiel der Fig. 7 ist im Unterschied zu den Ausführungsbeispielen der Fig. 5 und 6 der Schichtaufbau nunmehr auf gegenüberliegenden Grundseiten des Plattengrundkörpers 68 und nicht an dessen Schmalseiten aufgebracht. Von besonderer Bedeutung ist hierbei, dass der Schichtaufbau als eine durchgehende Platte ausgebildet ist, die lediglich ein zentrales Befestigungsloch 70 aufweist.

Im Ausführungsbeispiel der Fig. 7A ― 7C ist die Wendeschneidplatte 20 als doppelseitige Wendeschneidplatte mit insgesamt acht Schneidkanten 72 ausgebildet. Der Winkel γ, der einen Freiwinkel bildet, wird durch eine stirnseitige Abschrägung des plattenförmigen Schichtaufbaus erreicht, wie insbesondere aus der Fig. 7C hervorgeht. Der Grundkörper 68 selbst weist aufgrund dieses speziellen Aufbaus keine Schrägen auf. Alternativ zu der doppelseitigen Wendeschneidplatte 20 kann natürlich der Schichtaufbau auch lediglich auf einer Seite aufgebracht sein.

Der Plattengrundkörper 68 weist weiterhin einen zentralen, um das Befestigungsloch 68 herum angeordneten Zentrierring 76 auf, der eine mehreckige, im Ausführungsbeispiel achteckige Außenkontur aufweist. Korrespondierend hierzu weist auch der Schichtaufbau eine mehreckige Innenkontur auf, so dass die auf dem Plattengrundkörper 68 aufzubringende Platte in der richtigen Drehlage angeordnet wird.

## Patentansprüche

1. Plattenförmiger Schneidkörper (20) , insbesondere für eine tangentiale Anordnung in einem Plattensitz (16), mit einem Plattengrundkörper (68), der zwei gegenüberliegende und über Schmalseiten (32) miteinander verbundene Grundseiten (22) umfasst, wobei zur Ausbildung einer Schneidkante (72) zwischen der Schmalseite (32) und der Grundseite (22) ein zwei Schichten (64,66) umfassender Beschichtungsaufbau mit einer Haftvermittlerschicht (66) und einer darauf angebrachten äußeren Schicht (64) aus einem Schneidwerkstoff wahlweise auf einer Schmalseite (32) oder auf einer Grundseite (22) des Plattengrundkörpers (68) aufgebracht ist.

2. Plattenförmiger Schneidkörper (20) nach Anspruch 1, bei dem die äußere Schicht (64) einen Freiwinkel (γ) zwischen Grundseite (22) und Schmalseite (32) bildet.

3. Plattenförmiger Schneidkörper (20) nach einem der vorhergehenden Ansprüche, bei dem der Beschichtungsaufbau als ein auf den Plattengrundkörper (68) aufgelöteter Sinterkörper ausgebildet ist.

4. Plattenförmiger Schneidkörper (20) nach einem der vorhergehenden Ansprüche, bei dem der Beschichtungsaufbau auf der Grundseite (22) bzw. auf der Schmalseite (32) vollflächig aufgebracht ist.

5. Plattenförmiger Schneidkörper (20) nach einem der vorhergehenden Ansprüche, bei dem der an den Schmalseiten (32) angebrachte Beschichtungsaufbau nach Art von Leisten ausgebildet ist.

6. Plattenförmiger Schneidkörper (20) nach Anspruch 5, bei dem die Leisten an zwei aneinander angrenzenden Schmalseiten (32) aneinander stoßen.

7. Plattenförmiger Schneidkörper (20) nach Anspruch 6, bei dem an zwei aneinander angrenzenden Schmalseiten (32) die Schichten (64,66) an einer Stoßkante auf Gehrung aneinander stoßen.

8. Plattenförmiger Schneidkörper (20) nach einem der Ansprüche 5 bis 7, bei dem der Beschichtungsaufbau umlaufend auf dem Plattengrundkörper (68) an den Schmalseiten (32) aufgebracht ist.

9. Plattenförmiger Schneidkörper (20) nach einem der Ansprüche 1 bis 4, bei dem der auf die Grundseite (22) aufgebrachte Beschichtungsaufbau als Lochplatte mit einem zentralen Befestigungsloch (70) ausgebildet ist.

10. Plattenförmiger Schneidkörper (20) nach Anspruch 9, bei dem der Plattengrundkörper (68) ein zentrales Befestigungsloch (70) mit einem darum angeordneten mehreckigen Zentrierring (76) aufweist und der Beschichtungsaufbau korrespondierend hierzu eine mehreckige Innenkontur.

11. Plattenförmiger Schneidkörper (20) nach einem der Ansprüche 9 bis 10 sowie nach Anspruch 2, bei dem der Freiwinkel (γ) durch eine stirnseitige Abschrägung des plattenförmigen Beschichtungsaufbaus erreicht ist, wobei der Plattengrundkörper (68) keine Schräge aufweist.
